(19) Europäisches Patentamt / European Patent Office / Office européen des brevets

(11) **EP 4 383 896 A1**

(12) **EUROPEAN PATENT APPLICATION**
published in accordance with Art. 153(4) EPC

(43) Date of publication:
**12.06.2024 Bulletin 2024/24**

(21) Application number: **22853518.3**

(22) Date of filing: **05.08.2022**

(51) International Patent Classification (IPC):
**H04W 72/04** (2023.01)    **H04W 48/08** (2009.01)
**H04L 5/00** (2006.01)

(52) Cooperative Patent Classification (CPC):
**H04L 5/00; H04W 48/08; H04W 72/04**

(86) International application number:
**PCT/KR2022/011617**

(87) International publication number:
**WO 2023/014143 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.08.2021   KR 20210103453**

(71) Applicant: **LG Electronics Inc.**
**Yeongdeungpo-gu**
**Seoul 07336 (KR)**

(72) Inventors:
• **LEE, Youngdae**
  Seoul 06772 (KR)
• **KIM, Jaehyung**
  Seoul 06772 (KR)
• **YANG, Suckchel**
  Seoul 06772 (KR)
• **HWANG, Seunggye**
  Seoul 06772 (KR)

(74) Representative: **Plasseraud IP**
**66, rue de la Chaussée d'Antin**
**75440 Paris Cedex 09 (FR)**

(54) **METHOD AND APPARATUS FOR PERFORMING UPLINK TRANSMISSION AND RECEPTION IN WIRELESS COMMUNICATION SYSTEM**

(57)   A method and apparatus for performing uplink transmission and reception in a wireless communication system are disclosed. The method by which a terminal performs an uplink transmission, according to an embodiment of the present disclosure, comprises the steps of: transmitting, to a terminal via one or more transceivers, first configuration information related to a first initial uplink bandwidth part for a RedCap terminal; and receiving a first PUCCH from the terminal in the first initial uplink BWP by using a PUCCH resource set provided by second configuration information related to a PUCCH resource for the RedCap terminal, wherein information related to deactivation of frequency hopping for transmission of the first PUCCH may be received together with the second configuration information from a base station.

FIG. 8

RECEIVING, FROM A BASE STATION, FIRST CONFIGURATION INFORMATION RELATED TO A FIRST INITIAL UPLINK BWP FOR A REDCAP UE — S810

TRANSMITTING THE FIRST PUCCH TO THE BASE STATION IN THE FIRST INITIAL UPLINK BWP USING THE PUCCH RESOURCE SET PROVIDED BY THE SECOND CONFIGURATION INFORMATION RELATED TO THE PUCCH RESOURCE FOR THE REDCAP UE — S820

EP 4 383 896 A1

**Description**

[Technical Field]

The present disclosure relates to a wireless communication system, and more specifically to a method and device for performing uplink transmission and reception in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing uplink transmission and reception in a wireless communication system.

Additionally, an additional technical problem of the present disclosure is to provide a method and device for configuring PUCCH resources for a terminal with specific capabilities during the initial access process.

The technical objects to be achieved by the present disclosure are not limited to the above-described technical objects, and other technical objects which are not described herein will be clearly understood by those skilled in the pertinent art from the following description.

[Technical Solution]

In one embodiment of the present disclosure, a method for a user equipment (UE) to perform uplink transmission in a wireless communication system may include receiving, from a base station, first configuration information related to a first initial uplink bandwidth part (BWP) for a reduced capability (RedCap) UE; and transmitting, to the base station, a first physical uplink control channel (PUCCH) on the first initial uplink BWP using a PUCCH resource set provided by second configuration information related to a PUCCH resource for the RedCap UE, and information related to disabling frequency hopping for the first PUCCH transmission may be received from the base station together with the second configuration information.

In another embodiment of the present disclosure, a method for a base station to perform uplink reception in a wireless communication system may include transmitting, to a user equipment (UE), first configuration information related to a first initial uplink bandwidth part (BWP) for a reduced capability (RedCap) UE; and receiving, from the UE, a first physical uplink control channel (PUCCH) on the first initial uplink BWP using a PUCCH resource set provided by second configuration information related to a PUCCH resource for the RedCap UE, and information related to disabling frequency hopping for the first PUCCH transmission may be transmitted to the UE together with the second configuration information.

[Technical Effects]

According to an embodiment of the present disclosure, a method and device for performing uplink transmission and reception in a wireless communication system may be provided.

According to an embodiment of the present disclosure, a method and apparatus for configuring PUCCH resources for a terminal with specific capabilities during an initial access process may be provided.

According to an embodiment of the present disclosure, PUCCH resources can be set/allocated more efficiently for a RedCap UE or a coverage enhancement (CE) UE.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of selecting a UE PUCCH resource before receiving terminal-specific PUCCH configuration information.
FIG. 8 is a diagram for describing an uplink transmission operation of a UE in a wireless communication system to which the present disclosure may be applied.
FIG. 9 is a diagram for describing an uplink reception operation of a base station in a wireless communication system to which the present disclosure may be applied.
FIG. 10 illustrates a method of configuring PUCCH resources for a terminal with specific capabilities in a wireless communication system to which the present disclosure may be applied.
FIG. 11 is a diagram for describing the signaling procedure of the network side and the UE according to an embodiment of the present disclosure.
FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control

- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

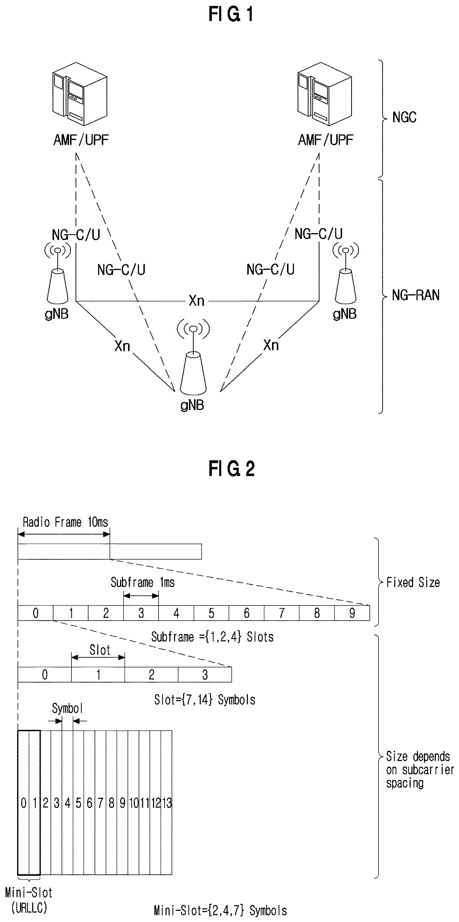

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | Δf=2^μ·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_\epsilon=1/(\Delta f_{max} N_f/100) \cdot T_c=10ms$. Here, a radio frame is configured with 10 subframes having a duration of $T_{sf}=(\Delta f_{max} Nf/1000) \cdot T_c=1ms$, respectively.

In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration μ, slots are numbered in an increasing order of $n_s^\mu \in \{0,...,N_{slot}^{subframe,\mu}-1\}$ in a subframe and are numbered in an increasing order of $n_{s,f}^\mu \in \{0, ..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

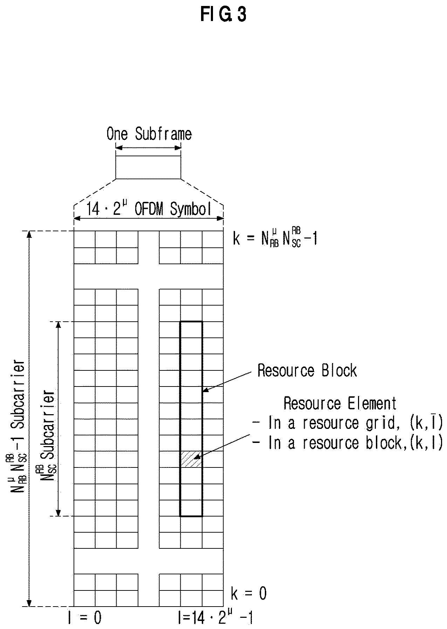

FIG. 3 illustrates a resource grid in a wireless communication system to which the present disclosure may be applied. In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies.

In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,..., N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain. Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

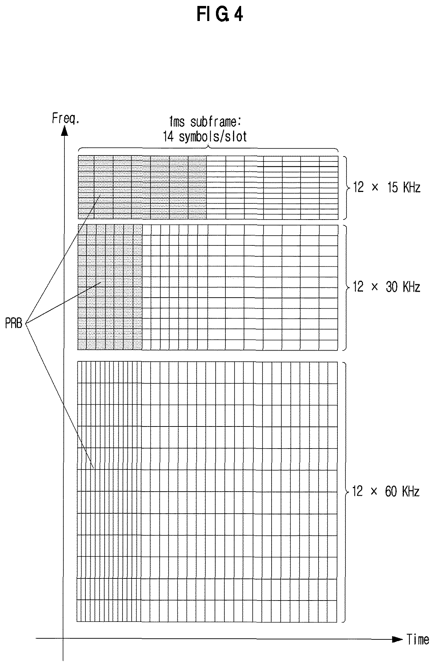

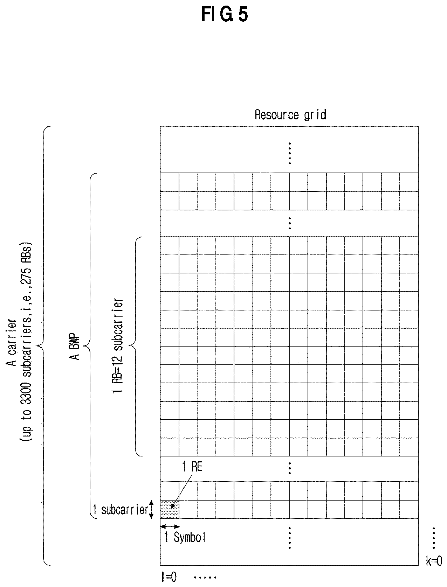

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing.

Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.).

Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

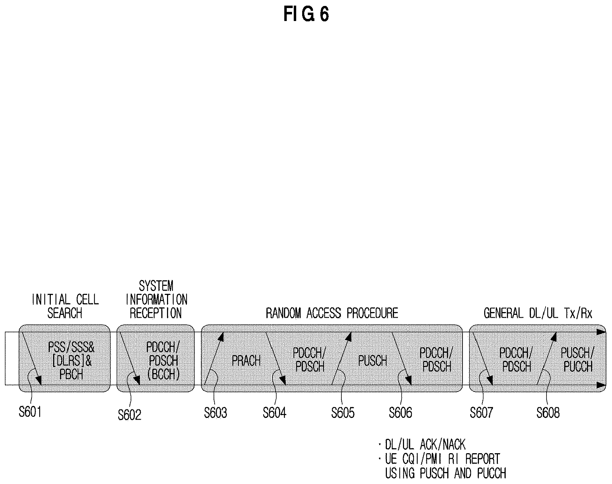

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601) . For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined. DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

PUCCH transmission operation of reduced capability (RedCap) and coverage enhancement (CE) UE

In an improved wireless communication system, a new type of UE that supports limited capabilities such as a small transmission/reception bandwidth or the number of transmission/reception antennas may be supported. Additionally, in an improved wireless communication system, a UE that supports CE capabilities to support wider coverage than the cell coverage supported by a general terminal may be supported.

In describing the present disclosure, a UE supporting limited capabilities may be referred to as an R UE/R-UE/RedCap UE, and a UE supporting CE capabilities may be referred to as a CE UE/CE UE.

Here, the R UE may support CE capabilities (i.e., CE UE), but is not limited thereto and may not support CE capabilities (i.e., non-CE). General UEs may also support CE capabilities. Additionally, the CE UE may be a general UE or an R UE.

During the initial connection process of a basic wireless communication system, the UE may select a PUCCH resource from the PUCCH resource set indicated by the parameter (e.g., 'pucch-ResourceCommon') included in SIB1 until it obtains UE-specific PUCCH configuration information from the base station. That is, 'pucch-ResourceCommon', an information element (IE) of SIB1, is 4-bit information and may indicate one of the 16 indices in Table 6 below (PUCCH resource set before dedicated PUCCH resource configuration). The indicated index may correspond to one of 16 PUCCH resource sets.

[Table 6]

| Inde x | PUCCH format | First symbol) | Number of symbols | PRB offset ( $RB_{BWP}^{offset}$ ) | Set of initial CS indexes |
|--------|--------------|---------------|-------------------|-----------------------------------|---------------------------|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{BWP}^{size}/4 \rfloor$ | {0, 3, 6, 9} |

Accordingly, until UE-specific PUCCH configuration information is acquired, the UE may select a PUCCH resource from one specific PUCCH resource set corresponding to the index indicated by SIB1.

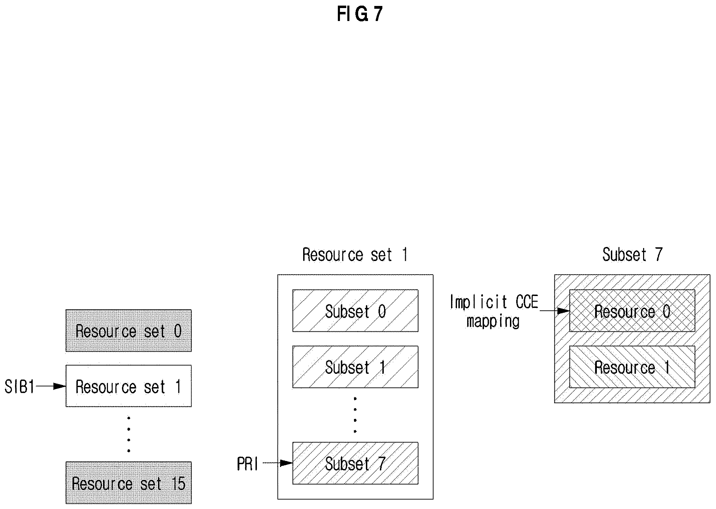

As shown in FIG. 7, the UE in RRC_IDLE state or RRC_INACTIVE state may receive IE 'pucch-Resource-Common' through SIB1 and may select a specific PUCCH resource set (e.g. PUCCH resource set 1) (from Table 6) according to the index indicated by IE 'pucch-ResourceCommon', 4-bit information of SIB1. One PUCCH resource set may include 16 PUCCH resources.

During the initial connection process, the UE may receive DCI. At this time, if the received DCI includes 3 bits of PRI (PUCCH resource indicator), the UE may select one PUCCH resource among the 16 PUCCH resources of PUCCH resource set 1 indicated by SIB1 according to PRI and implicit CCE (c)-based mapping.

For example, as shown in FIG. 7, the UE may select subset 7 indicated by PRI and select PUCCH resource 0 of subset 7 according to implicit control channel element (CCE)-based mapping. Therefore, the UE may finally select one of the 16 PUCCH resources included in the specific PUCCH resource set and transmit the PUCCH using the selected PUCCH resource. At this time, PUCCH transmission may include uplink control information (UCI). UCI may include HARQ-ACK information, scheduling request information, CSI reporting information, etc.

All UEs performing initial access in a basic wireless system may select one PUCCH resource within the same PUCCH resource set. However, unlike general UEs, R UEs or CE UEs may require separate configurations for PUCCH transmission, and may not require specific configurations required by general UEs.

For example, an R UE may not need frequency hopping when transmitting a PUCCH, and a CE UE may need N repeated transmissions when transmitting a PUCCH. Therefore, in a basic wireless system, there may be a problem of not being able to support suitable PUCCH resources for the R UE or CE terminal until UE-specific PUCCH configuration information is acquired.

Hereinafter, a method for configuring PUCCH resources for an R UE or CE UE in an enhanced wireless system will be described.

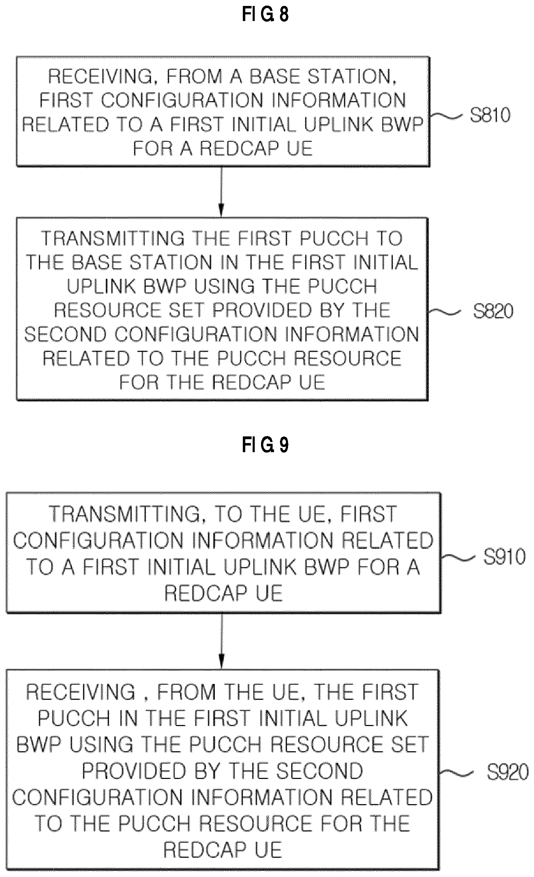

FIG. 8 is a diagram for describing an uplink transmission operation of a UE in a wireless communication system to which the present disclosure may be applied.

The UE may receive first configuration information related to the first initial uplink bandwidth part (BWP) for the reduced capability (RedCap) UE from the base station (S810).

Specifically, the first configuration information may include information/parameters (e.g., 'initialUplinkBWP-RedCap', etc.) for configuring the initial uplink BWP for the RedCap UE.

As an example, the first configuration information may be received from the base station through SIB1 (system information block type 1). In the initial access stage, the UE may receive information/parameters for configuring the initial uplink BWP for the RedCap UE from the base station through SIB1.

And, based on the size of the BWP supported by the UE being smaller than the size of the second initial uplink BWP, the UE may receive the first configuration information from the base station.

Here, the second initial uplink BWP may be an initial uplink BWP configured for a general UE. That is, if the size of the maximum BWP supported by the UE is smaller than the size of the second initial uplink BWP, the UE may expect to receive the first configuration information from the base station.

In addition, SIB1 may include fourth configuration information (e.g., 'pucch-ResourceCommon') related to the PUCCH resource set to be used in the second initial uplink BWP.

The UE may transmit, to the base station, the first physical uplink control channel (PUCCH) in the first initial uplink BWP using the PUCCH resource set provided by the second configuration information related to the PUCCH resource for the RedCap UE (S820) .

Specifically, the second configuration information may include information/parameters (e.g., 'pucch-Resource-Common-RedCap', etc.) for separately configuring PUCCH resources for the RedCap UE. For example, the second configuration information may include information configuring/indicating the index of a specific PUCCH resource set for the RedCap UE.

Here, the second configuration information may be included in the first configuration information, but is not limited thereto, and the second configuration information may be separately transmitted from the base station to the UE.

Based on the PUCCH resource indicator (PRI) field included in downlink control information (DCI) and the CCE index corresponding to the physical downlink control channel (PDCCH) including the DCI, the UE may transmit the first PUCCH to the base station using a specific PUCCH resource among a plurality of PUCCH resources included in the PUCCH resource set.

Here, the UE may receive information (or indicator) related to disabling frequency hopping for the first PUCCH transmission from the base station along with the second configuration information.

For example, the second configuration information may be transmitted from the base station to the UE through a parameter (e.g., 'PUCCH-ConfigCommon') that configures a cell-specific PUCCH parameter (or a UE common PUCCH parameter). Here, the parameter for configuring the cell-specific PUCCH parameter may include information related to disabling frequency hopping (e.g., 'intra-SlotFH'). Accordingly, the UE may receive information related to disabling frequency hopping for the first PUCCH transmission from the base station along with the second configuration information.

And, the UE may transmit the PUCCH to the base station based on the second configuration information until the third configuration information related to the dedicated PUCCH resource is received during the initial access procedure.

Based on the third configuration information related to the dedicated PUCCH resource being received from the base station, the UE may transmit the second PUCCH to the base station based on the third configuration information.

The UE may receive fifth configuration information related to the random access channel (RACH) for the RedCap UE from the base station. The UE may perform a random access procedure based on the received fifth configuration information.

FIG. 9 is a diagram for describing an uplink reception operation of a base station in a wireless communication system to which the present disclosure may be applied.

The base station may transmit first configuration information related to the first initial uplink bandwidth part (BWP) for the RedCap UE to the terminal (S910).

The base station may receive the first PUCCH from the UE using the PUCCH resource set provided by the second configuration information related to the PUCCH resource for the RedCap UE in the first initial uplink BWP (S920).

Since the description related to S910 and S920 (For example, exchange procedures for first, second, third, fourth, and fifth setting information, etc.) performed by the base station may correspond to the description of S810 and S820, overlapping description will be omitted.

Hereinafter, a method for configuring PUCCH resources for an R UE or CE UE in an enhanced wireless system will be described in detail.

Method for configuring PUCCH resources for R UE/CE UE

In the present disclosure, the base station may indicate a first PUCCH resource set for general UEs through system information and may additionally indicate a second PUCCH resource set for specific types of UEs (e.g., R UE/CE UE, etc.) with specific capabilities or limited capabilities. A specific type of UE that has received system information may select PUCCH resources using the second PUCCH resource set until it receives terminal-specific PUCCH configuration information.

Specifically, when DCI including PRI is received before receiving configuration information for UE-only PUCCH, the UE may select the PUCCH resource indicated by PRI among the PUCCH resources of the second PUCCH resource set. And, the UE may transmit PUCCH using the selected PUCCH resource.

The UE may receive the third PUCCH resource set through UE-specific PUCCH configuration information. At this time, the UE may not use the first and second PUCCH resource sets. And, when receiving a DCI including a PRI, the UE may select the PUCCH resource indicated by the PRI among the PUCCH resources of the third PUCCH resource set and transmit the PUCCH using the selected PUCCH resource.

The method described in the present disclosure may be applied to a specific type of UE with specific capabilities. For example, the method of the present disclosure may be applied to a PUCCH resource selection method for PUCCH transmission before the R UE or CE UE receives UE-specific PUCCH configuration information. Specifically, the method described in the present disclosure may be applied when a general UE that is a CE UE, an R UE that is a CE UE, or an R UE that is a non-CE UE transmits the PUCCH.

The UE may perform PUCCH transmission in a specific UL BWP. For example, a specific UL BWP may be 1) the initial UL BWP during the initial connection process, 2) the first active UL BWP in the target cell in the handover procedure, 3) in BFR (beam failure recovery), the UE activation BWP/initial UL BWP/default BWP of the serving cell, and 4) the first UL BWP of the cell selected by the UE during the RRC reconfiguration process.

The base station may periodically transmit SIB1 in one cell. The base station may transmit PUCCH configuration information for the R UE and/or the CE UE to the UE through SIB1. At this time, SIB1 may be a SIB1 message to all UEs in the cell. Alternatively, SIB1 may be a separate SIB1 message dedicated to the R UE, CE UE, or R UE/CE UE.

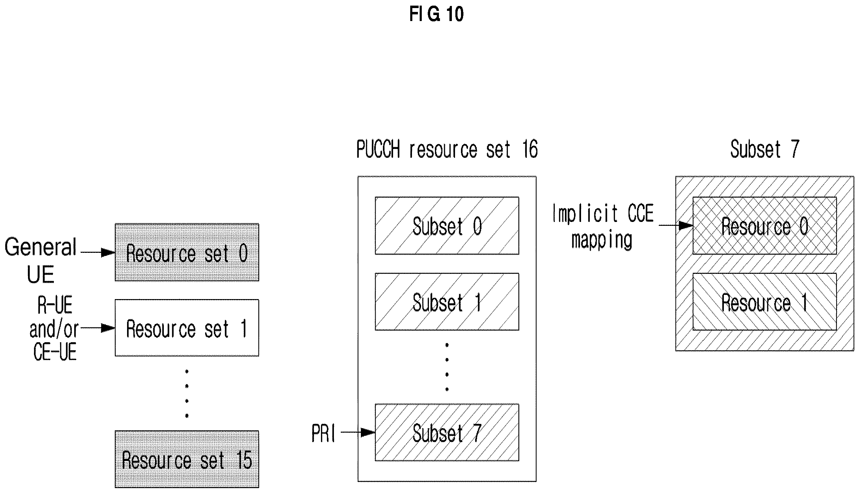

As shown in FIG. 10, the base station may configure a common PUCCH resource set (e.g., PUCCH resource set 1) for general UEs through SIB1 and a separate common PUCCH resource set (e.g., PUCCH resource set 15) for R UEs/CE UEs. That is, the base station may separately configure a common PUCCH resource set for each general UE and R UE/CE UE through SIB1.

Accordingly, the R UE or CE UE may select a separate PUCCH resource set 15 and transmit PUCCH using at least one of the PUCCH resources included in the PUCCH resource set 15. The R UE or CE UE may transmit PUCCH using the PUCCH resource set of SIB1 until it receives the UE-specific PUCCH resource set after the initial access process.

Another example, the base station may configure additional N PUCCH resource sets for the R UE/CE UE in addition to the 16 PUCCH resource sets. The R UE/CE UE may select one PUCCH resource set from (N+15) or N PUCCH resource sets through an embodiment to be described later.

Specifically, the base station may configure a separate PUCCH resource set for the R UE/CE UE through SIB1 in one of the embodiments to be described later. At this time, the R UE or CE UE may determine the PUCCH resource set through one of the embodiments applied by the base station, which will be described later. Depending on the configurations of the base station, the same or different configuration methods may be applied to the R UE/CE UE.

For example, Embodiment 4 may be applied to the R UE and Embodiment 1 may be applied to the CE UE depending on the configurations of the base station.

As another example, Embodiment 2 or Embodiment 3 may be applied to the R UE, and the CE UE may be configured to apply the method shown in FIG. 7 like general terminals. At this time, a separate PUCCH resource set may be allocated only to the R terminal, and the same PUCCH resource set may be allocated to the CE UE and the general UE.

As another example, a new embodiment (e.g., Embodiment 2) may be applied to the CE UE, and the R UE may be configured to apply the method shown in FIG. 7 like general UEs. At this time, a separate PUCCH resource set may be allocated only to the CE UE, and the same PUCCH resource set may be allocated to the R UE and the general UE.

In an embodiment to be described later, when a separate PUCCH resource set is configured for the R UE/CE UE, some PUCCH functions may be configured to be deactivated for the R UE/CE UE. For example, when a separate PUCCH resource set is configured without separate configurations, if a PUCCH resource is selected from the corresponding PUCCH resource set by the R UE/CE UE, the frequency hopping function for PUCCH transmission may be disabled for the R UE/CE UE. That is, if a separate PUCCH resource set is configured for the R UE/CE UE, the R UE/CE UE may transmit PUCCH without frequency hopping.

Alternatively, if a separate PUCCH resource set is configured for the R UE/CE UE, an indicator for enabling or disabling a specific function may be included in 'PUCCH-ConfigCommon' or 'BWP-UplinkCommon' (in an embodiment to be described later).

For example, assume that a frequency hopping enabling/disabling indicator is included in 'PUCCH-ConfigCommon' or 'BWP-UplinkCommon' applied to the R UE/CE UE. When disabling frequency hopping is indicated, when selecting a PUCCH resource from the corresponding PUCCH resource set, the R UE/CE UE may disable the frequency hopping function for PUCCH transmission and transmit PUCCH without frequency hopping.

Specifically, enabling or disabling frequency hopping may be indicated by a specific value of 'hoppingId' in 'PUCCH-ConfigCommon', and enabling or disabling frequency hopping may be indicated by including a new indicator in 'PUCCH-ConfigCommon'.

As another example, if SIB1 does not include separate PUCCH resource set configuration information for the R UE/CE UE, the UE may select the PUCCH resource using the same PUCCH resource set as a general UE according to the SIB1 information.

Embodiment 1

Embodiment 1 relates to a method of configuring a separate 'pucch-ResourceCommon' (for R UE/CE UE) within 'PUCCH-ConfigCommon'.

Specifically, SIB1 may include IE 'BWP-UplinkCommon', which is uplink BWP configuration information commonly applied to UEs for initial uplink BWP configuration. At this time, IE 'BWP-UplinkCommon' may include 'IE PUCCH-ConfigCommon' of SIB1, which is UE common PUCCH configuration information, and 'IE PUCCH-ConfigCommon' of SIB1 may be configured as shown in Table 7.

[Table 7]

```
PUCCH-ConfigCommon ::= SEQUENCE {
pucch-ResourceCommon INTEGER (0..15) OPTIONAL, -- Cond InitialBWP-Only
pucch-ResourceCommon-RedCap INTEGER (0..15) OPTIONAL, -- Cond
InitialBWP-Only
pucch-ResourceCommon-CE INTEGER (0..15) OPTIONAL, -- Cond InitialBWP-Only
pucch-GroupHopping ENUMERATED { neither, enable, disable },
hoppingId INTEGER (0..1023) OPTIONAL, -- Need R
p0-nominal INTEGER (-202..24) OPTIONAL, -- Need R
... }
```

IE 'PUCCH-ConfigCommon' of SIB1 may include a separate IE 'pucch-ResourceCommon' for R UE/CE UE. For example, 'pucch-ResourceCommon-RedCap' in Table 7 may indicate an index for the PUCCH resource set for the R UE. And, 'pucch-ResourceCommon-CE' in Table 7 may indicate an index for the PUCCH resource set for the CE UE. Alternatively, a separate set of common PUCCH resources may be indicated for R UEs/CE UEs through a separate 'pucch-ResourceCommon'. A general UE may select a PUCCH resource from the PUCCH resource set indicated by 'pucch-ResourceCommon' within 'PUCCH-ConfigCommon'. And, the R UE/CE UE may select a PUCCH resource from the PUCCH resource set indicated by a separate 'pucch-ResourceCommon' within the same 'PUCCH-ConfigCommon'. Therefore, the base station may configure the general UE and the R UE/CE UE to select different PUCCH resource sets.

Embodiment 2

Embodiment 2 relates to a method of configuring a separate 'PUCCH-ConfigCommon' (for R UE/CE UE) within the same 'BWP-UplinkCommon'.

SIB1 may include IE 'BWP-UplinkCommon', which is uplink BWP configuration information commonly applied to UEs for initial uplink BWP configuration. At this time, IE 'BWP-UplinkCommon' may include a plurality of IE 'PUCCH-ConfigCommon' of SIB1, which is UE common PUCCH configuration information, as shown in Table 8.

[Table 8]

```
PUCCH-ConfigCommon ::= SEQUENCE {
pucch-ResourceCommon INTEGER (0..15) OPTIONAL, -- Cond InitialBWP-Only
pucch-GroupHopping ENUMERATED { neither, enable, disable },
hoppingId INTEGER (0..1023) OPTIONAL, -- Need R
p0-nominal INTEGER (-202..24) OPTIONAL, -- Need R
...
}
PUCCH-ConfigCommon-RedCap ::= SEQUENCE {
pucch-ResourceCommon INTEGER (0..15) OPTIONAL, -- Cond InitialBWP-Only
pucch-GroupHopping ENUMERATED { neither, enable, disable },
hoppingId INTEGER (0..1023) OPTIONAL, -- Need R
p0-nominal INTEGER (-202..24) OPTIONAL, -- Need R
...
}
PUCCH-ConfigCommon-CE ::= SEQUENCE {
pucch-ResourceCommon INTEGER (0..15) OPTIONAL, -- Cond InitialBWP-Only
pucch-GroupHopping ENUMERATED { neither, enable, disable },
hoppingId INTEGER (0..1023) OPTIONAL, -- Need R
p0-nominal INTEGER (-202..24) OPTIONAL, -- Need R
...
}
```

SIB1 may include a separate IE 'PUCCH-ConfigCommon' for R UE/CE UE as shown in Table 8. For example, 'PUCCH-ConfigCommon-RedCap' in Table 8 may include 'pucch-ResourceCommon' indicating an index for the PUCCH resource set for the R UE. And, 'PUCCH-ConfigCommon-CE' may include 'pucch-ResourceCommon' indicating an index for the PUCCH resource set for the CE UE. Alternatively, the base station may indicate a separate set of PUCCH resources common to R terminals/CE terminals through 'pucch-ResourceCommon' of a separate IE 'PUCCH-Config-Common'.

<u>Embodiment 3</u>

Embodiment 3 relates to a method of configuring a separate uplink BWP (for R terminal/CE terminal) within the same SIB1.

SIB1 may include separate uplink BWP information applied only to R UEs/CE UEs separately from the uplink BWP configuration information commonly applied to general UEs for initial uplink BWP configuration.

For example, IE 'BWP-UplinkCommon' may be configured to apply within the SIB for general UEs, and a separate IE 'BWP-UplinkCommon' (e.g., IE 'BWP-UplinkCommon-RedCap' or IE 'BWP-UplinkCommon-CE') may be applied to R UEs/CE UEs.

Specifically, for UL BWP used exclusively for R UEs/CE UEs, SIB1 may include a separate IE 'BWP-Uplink-Common 2'. At this time, 'PUCCH-ConfigCommon-RedCap' included in 'BWP-UplinkCommon2' may include one 'pucch-ResourceCommon' indicating an index for the PUCCH resource set for the R terminal. And, 'PUCCH-ConfigCommon-CE' included in 'BWP-UplinkCommon2' may include one 'pucch-ResourceCommon' indicating an index for the PUCCH resource set for the CE terminal.

Additionally or alternatively, one IE 'PUCCH-ConfigCommon' included in 'BWP-UplinkCommon2' may include one 'pucch-ResourceCommon', and a separate set of PUCCH resources common to R UEs and CE UEs may be indicated by 'pucch-ResourceCommon' .

For a general UE, a PUCCH resource may be selected from the PUCCH resource set indicated by 'pucch-ResourceCommon' within the existing 'BWP-UplinkCommon' included in SIB1. The R UE/CE UE may select a PUCCH resource from the PUCCH resource set indicated by 'pucch-ResourceCommon' within a separate 'BWP-UplinkCommon2' of the same SIB1. Therefore, the base station may configure the general UE and the R UE/CE UE to select different PUCCH resource sets.

Embodiment 4

Embodiment 4 relates to a method of configuring a separate SIB1 (for R UE/CE UE).

According to Embodiment 4, the base station may simultaneously operate at least two types of SIB1 (e.g., SIB1 and R-SIB1) for one cell. At this time, the master information block (MIB) of the cell may be mapped to both types of SIB1, or the MIB may be mapped to SIB1 and SIB1 may be mapped to R-SIB1. Accordingly, the R UE/CE UE may immediately receive R-SIB1 according to the MIB information after receiving the MIB. As another example, the R UE/CE UE may receive SIB1 (received according to MIB information) and then receive R-SIB1 according to SIB1 information.

SIB1 and R-SIB1 may include scheduling information (e.g., 'schedulingInfoList') that indicates whether other SIBs are broadcast and transmission intervals, and configuration information related to cell-specific random access parameters (e.g., 'RACH-ConfigCommon').

And, SIB1 may include IE 'PUCCH-ConfigCommon' for general UEs, and separate R-SIB1 may include separate IE 'PUCCH-ConfigCommon' for R UEs/CE UEs.

For example, 'PUCCH-ConfigCommon-RedCap' included in R-SIB1 may include 'pucch-ResourceCommon' indicating an index for the PUCCH resource set for the R UE. And, 'PUCCH-ConfigCommon-CE' included in R-SIB1 may include 'pucch-ResourceCommon' indicating an index for the PUCCH resource set for the CE UE.

Additionally or alternatively, the base station may indicate a separate set of PUCCH resources common to R terminals/CE UEs through one 'pucch-ResourceCommon' indicated by one IE 'PUCCH-ConfigCommon' included in R-SIB1.

Accordingly, a general UE may select a PUCCH resource from the PUCCH resource set indicated by 'pucch-ResourceCommon' within 'PUCCH-ConfigCommon' included in conventional SIB1. And, the R UE/CE UE may select a PUCCH resource from the PUCCH resource set indicated by 'pucch-ResourceCommon' within a separate 'PUCCH-ConfigCommon' included in R-SIB1. Therefore, the base station may configure the general UE and the R UE/CE UE to select different PUCCH resource sets.

Embodiment 5

Embodiment 5 relates to a method in which an R UE/CE UE selects a PUCCH resource based on PRI.

Before receiving a UE-specific PUCCH resource set, when it is determined that different types of UEs will use the same PUCCH resource set according to the above-described embodiments (e.g., Embodiments 1 to 4), the base station may configure different types of UEs to select/apply different PUCCH resources within the same PUCCH resource set in a manner that will be described later.

If R UE/CE UE is configured to use the same PUCCH resource set, or is configured to use the same PUCCH resource set as general UE and R UE/CE UE, or is configured to use the same PUCCH resource set for all terminal types, a method described later may be applied.

Embodiment 5-1

When different types of UEs are configured to use the same PUCCH resource set through SIB1, different types of UEs may use PUCCH resources corresponding to different PRI values. That is, Embodiment 5-1 relates to a method in which different types of UEs select PUCCH resources based on different PRI values.

For example, if the same PUCCH resource set is configured for a general UE and an R UE/CE UE, Among the 16 PUCCH resources in the PUCCH resource set, the base station may set 8 PUCCH resources to be used by general terminals, and the remaining 8 PUCCH resources may be configured to be used by R UEs/CE UEs. Another example, among the 16 PUCCH resources, the base station may configure 8 PUCCH resources to be used by general UEs, the remaining 4 PUCCH resources to be used by R UEs, and the remaining 4 PUCCH resources to be used by CE UEs.

In this case, among the values of the PRI field included in the DCI, 0 to 7 may be applied to general UEs, and the remaining 8 to 15 may be applied to R UEs/CE UEs.

Information for configuring the method according to Embodiment 5-1 may be included in SIB1, 'BWP-Uplink-Common', or 'PUCCH-ConfigCommon'. Additionally or alternatively, a DCI value applicable only to the R UE/CE UE (e.g., the value of the PRI field within the DCI) may be predefined/configured.

Embodiment 5-2

In a basic wireless communication system, when DCI includes a PRI field, the UE may select one PUCCH resource among 16 PUCCH resources included in PUCCH resource set 1 indicated by SIB1 according to the 3-bit PRI indicated by DCI and implicit CCE-based mapping.

Embodiment 5-2 relates to a method of separating/selecting PUCCH resources by UE type instead of implicit CCE mapping.

For example, if the R UE and the CE UE are configured to share the same PUCCH resource set, the R UE may be configured to select PUCCH resource 0 from the PUCCH resource subset indicated by PRI, and the CE UE may be configured to select PUCCH resource 1 from the PUCCH resource subset indicated by PRI. That is, as shown in FIG. 10, when subset 7 indicated by PRI is selected, the R UE may select PUCCH resource 0 of subset 7, and the CE UE may select PUCCH resource 1 of subset 7.

Additionally or alternatively, if the general UE and the R UE/CE UE are configured to share the same PUCCH resource set, the general UE may select PUCCH resource 0 according to implicit CCE-based mapping in the PUCCH resource subset indicated by PRI. And, the R UE/CE UE may be configured to select only PUCCH resource 1 from the PUCCH resource subset indicated by PRI.

That is, as shown in FIG. 10, if subset 7 is selected by PRI, the general UE may select PUCCH resource 0 of subset 7 according to implicit CCE-based mapping, and the R UE/CE UE may select PUCCH resource 1 of subset 7 according to the UE type.

The base station may configure whether a specific type of terminal will use PUCCH resource 0 or 1 through SIB1, 'BWP-UplinkCommon', or 'PUCCH-ConfigCommon'. Alternatively, whether a specific type of UE will use PUCCH resource 0 or 1 may be configured/defined in advance.

Embodiment 5-3

The base station may add M PUCCH resources separately from the 16 PUCCH resources within the PUCCH resource set. Accordingly, when different types of UEs are configured to use the same PUCCH resource set through SIB1, specific types of UEs may be configured to select one of the added M PUCCH resources.

For example, if the same PUCCH resource set is configured for a general UE and an R UE/CE UE, R UEs/CE UEs may be configured to select one of the total (16+M) PUCCH resources in the PUCCH resource set, or only one of the added M PUCCH resources.

Here, the general UE is configured to recognize that the DCI's PRI indicates one of the existing 16 PUCCH resources, and the R UE/CE UE may be configured to recognize that the PRI of the DCI indicates one of the total (16+M) PUCCH resources or one of the M PUCCH resources.

For example, if M is configured to 8, the PRI field of the DCI received by the R UE/CE UE indicates one of eight PUCCH resource subsets, and each PUCCH resource subset may be configured to include three PUCCH resources 0, 1, and 2. Among these, PUCCH resources 0 and 1 may be mapped in an implicit CCE-based manner (for general UEs), and PUCCH resource 2 may be mapped according to a specific UE type.

As an another example, if M is set to 16, the PRI field of the DCI received by the R UE/CE UE indicates one of eight PUCCH resource subsets, and each PUCCH resource subset may be set to include four PUCCH resources 0, 1, 2, and 3. Among these, PUCCH resources 0 and 1 may be mapped in an implicit CCE-based manner (for general UEs), and PUCCH resources 2 and 3 may be mapped to R UEs and CE UEs, respectively.

As an another example, the PRI field of the DCI received by a general UE indicates one of the existing 16 PUCCH resources, but the PRI field of the DCI received by the R UE/CE UE may be configured to indicate only one of the new M PUCCH resources.

For example, when M is set to 8, the value of the 3-bit PRI field of the DCI received by the R UE/CE UE may indicate the entry of one of the new M PUCCH resources.

As another example, when M is set to 16, the value of the 3-bit PRI field included in the DCI received by the R UE or CE UE may indicate one of the new 8 PUCCH resource subsets. And, the R UE/CE UE may select PUCCH resource 0 or 1 within the indicated PUCCH resource subset according to implicit CCE mapping or UE type within the indicated PUCCH resource subset.

Additionally or alternatively, in the 2-step RACH procedure, the UE may transmit message A (Msg. A) to the base station. The base station may transmit Msg. B to the UE in response to Msg. A. Here, Success RAR MAC CE corresponding to Msg. B may include PRI to be used by the general UE/R UE/CE UE.

In this case, Embodiment 5-1/ Embodiment 5-2/ Embodiment 5-3 (same as PRI of the DCI) may be applied to the UE. That is, the PRI of the MAC CE may be configured/interpreted in the same way as the above-described PUCCH resource configuration method (e.g., Embodiments 1 to 4) and the DCI's PRI indication method (e.g., Embodiments 5-1 to 5-3), and the PUCCH resource may be selected accordingly.

In the present disclosure, the term 'general UE' which is a CE UE may be replaced with 'general UE requiring Msg. 3 PUSCH repetition', and the term 'R' UE which is a CE UE may be replaced with 'R UE requiring Msg. 3 PUSCH repetition'. In addition, for a non-CE general UE, the term may be replaced with a general UE that does not require Msg. 3 PUSCH repetition, and the term non-CE R UE may be replaced with an R UE that does not require Msg. 3 PUSCH repetition.

For example, a UE identified as a CE UE according to UE capabilities may be divided into a CE UE that does not require Msg. 3 PUSCH repetition and a CE UE that requires Msg. 3 PUSCH repetition. At this time, in the present disclosure, the CE UE may refer to both a CE UE that does not require Msg. 3 PUSCH repetition and a CE UE that requires Msg. 3 PUSCH repetition. Alternatively, CE UE may only mean a CE UE that requests Msg. 3 PUSCH repetition.

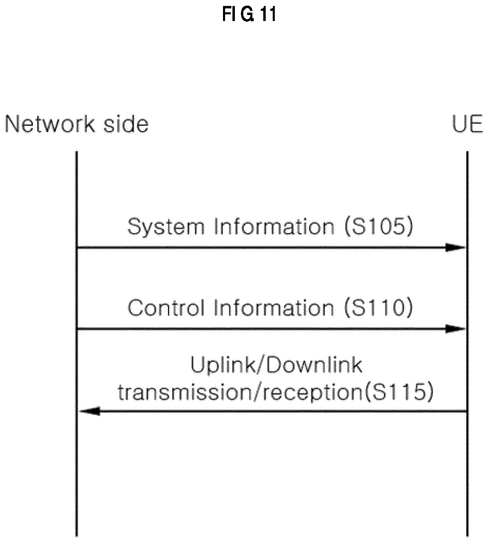

FIG. 11 is a diagram for describing the signaling procedure of the network side and the UE according to an embodiment of the present disclosure.

FIG. 11 shows an example of signaling between a network side and a terminal (UE) in a situation where the embodiments of the present disclosure (e.g., Embodiment 1, Embodiment 2, Embodiment 3, Embodiment 4, Embodiment 5, or a combination of one or more of the detailed Embodiments thereof) described above may be applied.

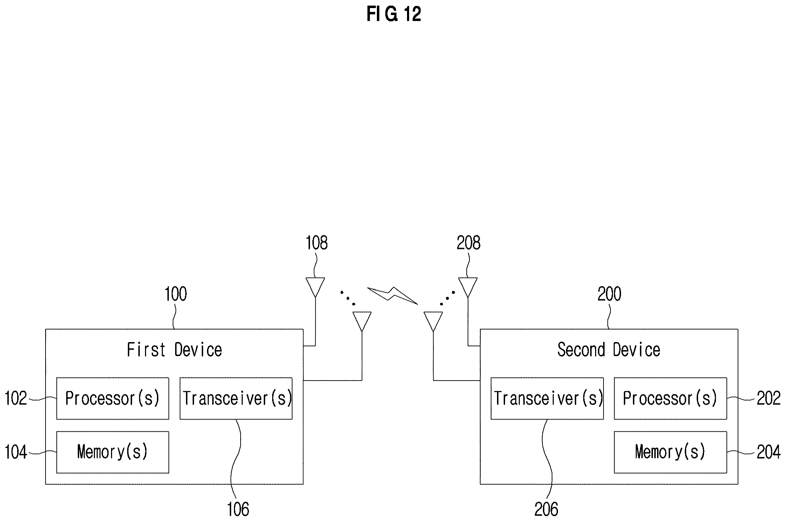

Here, the UE/network side is exemplary and may be applied to various devices as described with reference to FIG. 12. FIG. 11 is for convenience of description, and does not limit the scope of the present disclosure. In addition, some step(s) shown in FIG. 11 may be omitted depending on circumstances and/or settings. In addition, in the operation of the network side / UE of FIG. 11, the above-described uplink transmission/reception operation, M-TRP related operation, etc. may be referred to or used.

In the following description, the network side may be one base station including a plurality of TRPs, or may be one cell including a plurality of TRPs. Alternatively, the network side may include a plurality of remote radio heads (RRHs)/remote radio units (RRUs). For example, an ideal/non-ideal backhaul may be established between TRP 1 and TRP 2 constituting the network side. In addition, although the following description is based on a plurality of TRPs, this may be equally extended and applied to transmission through a plurality of panels/cells, and may also be extended and applied to transmission through a plurality of RRHs/RRUs.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

In an example, when one UE is configured to perform transmission and reception with a plurality of TRPs (or cells), it may mean that a plurality of CORESET groups (or CORESET pools) are configured for one terminal. A configuration on such a CORESET group (or a CORESET pool) may be performed through higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive system information (SI) from the network side (S105).

SI may include a Master Information Block (MIB) and multiple System Information Blocks (SIBs). SI other than MIB may be referred to as Remaining Minimum System Information (RMSI) or/and Other System Information (OSI). Here, RMSI refers to SIB1 (SystemInformationBlockType1), and OSI may refer to the remaining SIBs of SIB2 or higher in addition to SIB1.

MIB may include information/parameters related to SIB1 reception and may be transmitted over the SSB's PBCH. The MIB may include 1) information for determining the common CORESET, common search space, and required PDCCH parameters (e.g., 'pdcch-ConfigSIB1'), 2) information related to the SCS (e.g. 'ssb-SubcarrierOffset' and 'sub-CarrierSpacingCommon').

When selecting an initial cell, the UE assumes that half-frames with SSB are repeated every 20 ms. The UE may check whether a CORESET for the TypeO-PDCCH common search space exists based on the MIB. TypeO-PDCCH common search space is a type of PDCCH search space and is used to transmit PDCCH for scheduling SI messages. If a TypeO-PDCCH common search space exists, based on the information in the MIB (e.g., 'pdcch-Conf igSIB1'), the UE can determine 1) a plurality of contiguous RBs and one or more contiguous symbols constituting CORESET, and 2) a PDCCH occasion (i.e., a time domain location for PDCCH reception). If a TypeO-PDCCH common search space does not exist, 'pdcch-ConfigSIB1' may provide information about the frequency location where SSB/SIB1 exists and the frequency range where SSB/SIB1 does not exist.

SIB1 may include information related to the availability and scheduling (e.g., transmission period, SI-window size) of the remaining SIBs (hereinafter SIBx, x is an integer greater than or equal to 2). For example, SIB1 may inform whether SIBx is broadcast periodically or provided at the request of the terminal in an on-demand manner.

When SIBx is provided in an on-demand manner, SIB1 may include information necessary for the UE to perform an SI request. SIB1 is transmitted through PDSCH, the PDCCH scheduling SIB1 is transmitted through the TypeO-PDCCH common search space, and SIB1 may be transmitted through the PDSCH indicated by the PDCCH.

SIB1 may include uplink BWP configuration information (e.g., 'BWP-UplinkCommon') commonly applied to UEs for initial uplink BWP configuration. 'BWP-UplinkCommon' may include terminal common PUCCH configuration information (e.g., 'PUCCH-ConfigCommon') .

SIBx is included in the SI message and may be transmitted through PDSCH. Each SI message may be transmitted within a periodically occurring time window (i.e., SI-window).

For example, the operation of the UE (100 or 200 in FIG. 12) in step S105 described above to receive the system information from the network side (200 or 100 in FIG. 12) may be implemented by the device in FIG. 12, which will be described below. For example, referring to FIG. 12, one or more processors 102 may control one or more transceivers 106 and/or one or more memories 104 to receive the system information, and one or more transceivers 106 may receive the system information from a network side.

The UE may receive control information from the network (S110). For example, the UE may receive downlink control information (DCI) for scheduling uplink/downlink from the network. Additionally, if the control information is defined or configured in advance, the corresponding step may be omitted.

For example, DCI may include a PRI field. The PRI field may consist of 3 bits, but is not limited thereto. The UE may select a specific PUCCH resource based on the PRI field from the configured PUCCH resource set.

For example, the operation of the UE (100 or 200 in FIG. 12) in step S110 described above receiving the control information from the network side (200 or 100 in FIG. 12) may be implemented by the device in FIG. 11, which will be described below. For example, referring to FIG. 12, one or more processors 102 may control one or more transceivers 106 and/or one or more memories 104 to receive the control information, and one or more transceivers 106 may receive the control information from a network side.

The UE may transmit uplink or receive downlink to the network (S115).

The UE may receive the PDSCH scheduled by DCI from the network side. The UE may transmit UCI (e.g., HARQ-ACK information for PDSCH) to the network through PUCCH. At this time, the UE may transmit the PUCCH to the network using the PUCCH resource selected based on the PRI field.

The UE may select a PUCCH resource based on the embodiments of the present disclosure (e.g., Embodiment 1, Embodiment 2, Embodiment 3, Embodiment 4, Embodiment 5, or a combination of one or more of the detailed Embodiments thereof) and transmit the PUCCH using the selected PUCCH resource.

For example, the operation of the UE (100 or 200 in FIG. 12) in step S115 described above transmitting uplink to the network side (200 or 100 in FIG. 12) or receiving downlink from the network side 200 or 100 in FIG. 12) can be implemented by the device of FIG. 12, which will be described below.

For example, referring to FIG. 12, one or more processors 102 may control one or more transceivers 106 and/or one or more memories 104, etc. to transmit uplink or receive downlink, and one or more transceivers 106 may transmit uplink or receive downlink to the network side.

General Device to which the Present Disclosure may be applied

FIG. 12 is a diagram which illustrates a block diagram of a wireless communication system according to an embodiment of the present disclosure.

In reference to FIG. 12, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202.

For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure.

One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method for a user equipment (UE) to perform uplink transmission in a wireless communication system, the method comprising:

   receiving, from a base station, first configuration information related to a first initial uplink bandwidth part (BWP) for a reduced capability (RedCap) UE; and
   transmitting, to the base station, a first physical uplink control channel (PUCCH) on the first initial uplink BWP using a PUCCH resource set provided by second configuration information related to a PUCCH resource for the RedCap UE,
   wherein information related to disabling frequency hopping for the first PUCCH transmission is received from the base station together with the second configuration information.

2. The method of claim 1, wherein:
   based on third configuration information related to dedicated PUCCH resources being received from the base station, a second PUCCH is transmitted to the base station based on the third configuration information.

3. The method of claim 2, wherein:
   the first PUCCH is transmitted to the base station based on the second configuration information until the third configuration information is received during an initial access procedure.

4. The method of claim 1, wherein:
   based on a size of a BWP supported by the UE being smaller than a size of a second initial uplink BWP, the first configuration information is received from the base station.

5. The method of claim 4, wherein:
   the first configuration information is received from the base station through a system information block type 1 (SIB1).

6. The method of claim 5, wherein:
   the SIB1 includes fourth configuration information related to a PUCCH resource set to be used in the second initial uplink BWP.

7. The method of claim 5, wherein:
   fifth configuration information related to a random access channel (RACH) for the RedCap UE is received from the base station.

8. The method of claim 1, wherein:
   based on a PUCCH resource indicator (PRI) field included in downlink control information (DCI) and a control channel element (CCE) index corresponding to a physical downlink control channel (PDCCH) including the DCI, the first PUCCH is transmitted to the base station using a specific PUCCH resource among a plurality of PUCCH resources included in the PUCCH resource set.

9. The method of claim 1, wherein:
   the UE is a UE with RedCap.

10. A user equipment (UE) performing uplink transmission in a wireless communication system, the UE comprising:

    at least one transceiver; and
    at least one processor coupled to the at least one transceiver,
    the at least one processor is configured to:

    receive, from a base station through the at least one transceiver, first configuration information related to a first initial uplink bandwidth part (BWP) for a reduced capability (RedCap) UE; and
    transmit, to the base station through the at least one transceiver, a first physical uplink control channel (PUCCH) on the first initial uplink BWP using a PUCCH resource set provided by second configuration information related to a PUCCH resource for the RedCap UE,
    wherein information related to disabling frequency hopping for the first PUCCH transmission is received from the base station together with the second configuration information.

**11.** A method for a base station to perform uplink reception in a wireless communication system, the method comprising:

transmitting, to a user equipment (UE), first configuration information related to a first initial uplink bandwidth part (BWP) for a reduced capability (RedCap) UE; and
receiving, from the UE, a first physical uplink control channel (PUCCH) on the first initial uplink BWP using a PUCCH resource set provided by second configuration information related to a PUCCH resource for the RedCap UE,
wherein information related to disabling frequency hopping for the first PUCCH transmission is transmitted to the UE together with the second configuration information.

**12.** A base station performing uplink reception in a wireless communication system, the base station comprising:

at least one transceiver; and
at least one processor coupled to the at least one transceiver,
wherein the at least one processor is configured to:

transmit, to a user equipment (UE) through the at least one transceiver, first configuration information related to a first initial uplink bandwidth part (BWP) for a reduced capability (RedCap) UE; and
receive, from the UE through the at least one transceiver, a first physical uplink control channel (PUCCH) on the first initial uplink BWP using a PUCCH resource set provided by second configuration information related to a PUCCH resource for the RedCap UE,
wherein information related to disabling frequency hopping for the first PUCCH transmission is transmitted to the UE together with the second configuration information.

**13.** A processing device configured to control a user equipment (UE) to perform uplink transmission in a wireless communication system, the processing device comprising:

at least one processor; and
at least one computer memory operatively coupled to the at least one processor and storing instructions for performing operations upon being executed by the at least one processor;
the operations include:

receiving, from a base station, first configuration information related to a first initial uplink bandwidth part (BWP) for a reduced capability (RedCap) UE; and
transmitting, to the base station, a first physical uplink control channel (PUCCH) on the first initial uplink BWP using a PUCCH resource set provided by second configuration information related to a PUCCH resource for the RedCap UE,
wherein information related to disabling frequency hopping for the first PUCCH transmission is received from the base station together with the second configuration information.

**14.** At least one non-transitory computer readable medium storing at least one instruction,
based on the at least one instruction being executed by at least one processor, an apparatus for performing uplink transmission in a wireless communication system controls to:

receive, from a base station, first configuration information related to a first initial uplink bandwidth part (BWP) for a reduced capability (RedCap) UE; and
transmit, to the base station, a first physical uplink control channel (PUCCH) on the first initial uplink BWP using a PUCCH resource set provided by second configuration information related to a PUCCH resource for the RedCap UE,
wherein information related to disabling frequency hopping for the first PUCCH transmission is received from the base station together with the second configuration information.

## FIG. 1

## FIG. 2

FIG. 3

One Subframe

$14 \cdot 2^{\mu}$ OFDM Symbol

$k = N_{RB}^{\mu} N_{SC}^{RB} - 1$

Resource Block

Resource Element
- In a resource grid, $(k, \bar{l})$
- In a resource block, $(k, l)$

$N_{RB}^{\mu} N_{SC}^{RB} - 1$ Subcarrier

$N_{SC}^{RB}$ Subcarrier

$k = 0$

$l = 0$

$l = 14 \cdot 2^{\mu} - 1$

# FIG. 4

FIG. 5

Resource grid

A carrier
(up to 3300 subcarriers,i.e.,275 RBs)

A BWP

1 RB=12 subcarrier

1 RE

1 subcarrier

1 Symbol

l=0 .....

k=0

# FIG 6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603

S604

S605

S606

S607

S608

· DL/UL ACK/NACK
· UE CQI/PMI RI REPORT
  USING PUSCH AND PUCCH

FIG 7

## FIG. 8

RECEIVING, FROM A BASE STATION, FIRST CONFIGURATION INFORMATION RELATED TO A FIRST INITIAL UPLINK BWP FOR A REDCAP UE — S810

TRANSMITTING THE FIRST PUCCH TO THE BASE STATION IN THE FIRST INITIAL UPLINK BWP USING THE PUCCH RESOURCE SET PROVIDED BY THE SECOND CONFIGURATION INFORMATION RELATED TO THE PUCCH RESOURCE FOR THE REDCAP UE — S820

## FIG. 9

TRANSMITTING, TO THE UE, FIRST CONFIGURATION INFORMATION RELATED TO A FIRST INITIAL UPLINK BWP FOR A REDCAP UE — S910

RECEIVING, FROM THE UE, THE FIRST PUCCH IN THE FIRST INITIAL UPLINK BWP USING THE PUCCH RESOURCE SET PROVIDED BY THE SECOND CONFIGURATION INFORMATION RELATED TO THE PUCCH RESOURCE FOR THE REDCAP UE — S920

FIG. 10

FIG 11

Network side                                         UE

System Information (S105)

Control Information (S110)

Uplink/Downlink
transmission/reception(S115)

EP 4 383 896 A1

## FIG 12

## INTERNATIONAL SEARCH REPORT

International application No.

**PCT/KR2022/011617**

| A. | CLASSIFICATION OF SUBJECT MATTER |
|---|---|
| | **H04W 72/04**(2009.01)i; **H04W 48/08**(2009.01)i; **H04L 5/00**(2006.01)i |

According to International Patent Classification (IPC) or to both national classification and IPC

| B. | FIELDS SEARCHED |
|---|---|

Minimum documentation searched (classification system followed by classification symbols)

H04W 72/04(2009.01); H04W 24/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 상향링크(uplink), 저감 캐퍼빌리티(reduced capability, RedCap), 초기(initial), 대역폭 파트(bandwidth part, BWP), PUCCH(physical uplink control channel), 주파수 호핑(frequency hopping), 비활성(disable)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | HUAWEI et al. Discussion on reduced maximum UE bandwidth for RedCap. R1-2104283, 3GPP TSG RAN WG1 #105-e. 12 May 2021.<br> See sections 2.3-2.5. | 1-14 |
| Y | ERICSSON. Reduced maximum UE bandwidth for RedCap. R1-2104179, 3GPP TSG RAN WG1 #105-e. 12 May 2021.<br> See sections 3.1-3.3.2. | 1-14 |
| A | SPREADTRUM COMMUNICATIONS. Discussion on aspects related to reduced maximum UE bandwidth. R1-2104428, 3GPP TSG RAN WG1 #105-e. 12 May 2021.<br> See sections 1-5. | 1-14 |
| A | ZTE et al. Bandwidth reduction for reduced capability NR devices. R1-2104710, 3GPP TSG RAN WG1 #105-e. 12 May 2021.<br> See sections 1-2. | 1-14 |
| A | US 2021-0195579 A1 (QUALCOMM INCORPORATED) 24 June 2021 (2021-06-24)<br> See paragraphs [0026]-[0146]; and figures 1-7. | 1-14 |

☐ Further documents are listed in the continuation of Box C.  ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2022/011617**

| Patent document cited in search report | | | Publication date (day/month/year) | Patent family member(s) | | | Publication date (day/month/year) |
|---|---|---|---|---|---|---|---|
| US | 2021-0195579 | A1 | 24 June 2021 | KR | 10-2022-0118430 | A | 25 August 2022 |
| | | | | TW | 202135491 | A | 16 September 2021 |
| | | | | WO | 2021-133554 | A1 | 01 July 2021 |

Form PCT/ISA/210 (patent family annex) (July 2022)